(19) Europäisches Patentamt
European Patent Office
Office européen des brevets

(11) **EP 1 739 111 B1**

(12) **EUROPEAN PATENT SPECIFICATION**

(45) Date of publication and mention
of the grant of the patent:
**14.11.2012 Bulletin 2012/46**

(51) Int Cl.:
*C08G 18/48* (2006.01)    *C08K 5/39* (2006.01)
*C08K 5/44* (2006.01)    *C08K 5/47* (2006.01)
*C08J 9/12* (2006.01)

(21) Application number: **06253098.5**

(22) Date of filing: **15.06.2006**

(54) **Polyurethane foam and a method of producing the same**

Polyurethanschaum und sein Herstellungsverfahren

Mousse polyuréthane et son procédé de préparation

(84) Designated Contracting States:
**DE FR GB**

(30) Priority: **28.06.2005 JP 2005188800**
**31.01.2006 JP 2006023152**

(43) Date of publication of application:
**03.01.2007 Bulletin 2007/01**

(73) Proprietor: **INOAC CORPORATION**
**Nagoya-shi,**
**Aichi 450-8691 (JP)**

(72) Inventors:
• **Nagazumi, Ryo**
**Anjo-shi**
**Aichi 446-8504 (JP)**

• **Saito, Susumu**
**Anjo-shi**
**Aichi 446-8504 (JP)**
• **Orita, Naotoshi**
**Anjo-shi**
**Aichi 446-8504 (JP)**

(74) Representative: **Sherrard-Smith, Hugh et al**
**Appleyard Lees**
**15 Clare Road**
**Halifax HX1 2HY (GB)**

(56) References cited:
**US-A- 3 751 392     US-A- 4 914 137**
**US-A1- 2002 052 427**

**Description**

The present invention relates to a polyurethane foam used for, for example, bedding, sound absorbing materials and cushioning materials, and having excellent mechanical properties such as tensile strength, tear strength and elongation, and a method of producing the same.

In the conventional art, when water alone is used as a blowing agent in the production of soft polyurethane foams having an apparent density of 25 kg/m$^3$ or lower, a larger amount of water must be added to raw materials. This advances blowing reaction and increases the exothermic temperature upon foaming to 170°C or higher. Accordingly, auto-ignition of polyurethane may be caused by oxidation degradation (scorch), and such scorch causes discoloration of the soft polyurethane foam to be obtained. To avoid such problems, a technique is known in which methylene chloride or liquefied carbon dioxide is added to raw materials as a foaming aid with maintaining the conventional amount of water.

However, since methylene chloride is a substance harmful to environment, there are regulations for the use of methylene chloride. On the other hand, foaming with liquefied carbon dioxide requires equipment exclusive for supplying liquefied carbon dioxide at high pressures. Thus, in order to carry out foaming smoothly, not only production conditions are restricted but also production costs are increased. Given this, for absorption of heat, techniques have been proposed in which polyolefin powder such as polyethylene powder is added to raw materials (see Japanese National Phase Laid-Open Patent Publication No. 2002-532596 and Japanese Laid-Open Patent Publication No. 6-199973).

However, in JP 2002-532596 and JP 6-199973 in which polyolefin powder is added to raw materials, the amount of polyolefin powder must be increased in order to effectively reduce the calorific value, although the polyolefin powder is found to be effective for lowering the exothermic temperature upon foaming and curing. In that situation, due to the increased amount of polyolefin powder, the apparent density of the obtained soft polyurethane foam becomes extremely high, and properties such as compressive residual strain are degraded. Thus, to avoid such degradation of properties, polyolefin powder cannot be added to raw materials in a sufficient amount. Therefore, exothermic temperature upon foaming and curing cannot be effectively lowered, and as a result, there has been a problem that coloring due to scorch cannot be prevented.

Given this, from JP 2002-532596 and JP 6-199973 a possible approach is to mix hydrate of an inorganic compound with a polyurethane foam raw material, and decompose the hydrate of an inorganic compound due to increase in the temperature of polyurethane foam upon foaming to generate water; then, due to evaporation of generated water, the exothermic temperature is lowered. However, in this approach, generated water reacts with polyisocyanates to advance blowing reaction, and consequently, the polyurethane foam becomes brittle and the mechanical properties such as tensile strength, tear strength and elongation become poor.

US 4 914 137 discloses means for the stabilization of polyurethane foam by using a combination of a phenothiazine with a co-stabilizing effective amount of a compound selected from the group consisting of certain dithiocarbamates, thiuramsulfides, mercaptobenzothiazole, phosphites, phosphonites, phenolic antioxidants, pentaerythritol-tetrakis(beta-laurylthiopropionate), 4,4'-thiobis(2-t-butyl-5-methylphenol) and mixtures thereof.

Accordingly, it is an objective of the present invention to provide a polyurethane foam whose mechanical properties such as tensile strength, tear strength and elongation can be improved and whose discoloration can be prevented, and a method of producing the same.

To achieve the forgoing and other objects and in accordance with the purpose of the present invention, a polyurethane foam for production by reaction, foaming and curing of a polyurethane foam raw material comprising polyols, polyisocyanates, a blowing agent and a catalyst is provided. A hydrate of an inorganic compound and at least one organic compound selected from benzothiazole compounds, dithiocarbamate compounds and sulfenamide compounds are mixed with the polyurethane foam raw material.

Further, the present invention provides a method of producing a polyurethane foam. The method comprises mixing a hydrate of an inorganic compound and at least one organic compound selected from benzothiazole compounds, dithiocarbamate compounds and sulfenamide compounds with a polyurethane foam raw material comprising polyols, polyisocyanates, a blowing agent and a catalyst, and causing the polyurethane foam raw material to react, foam and cure.

Other aspects and advantages of the invention will become apparent from the following description, taken in conjunction with the accompanying drawings, illustrating by way of example the principles of the invention.

In the following, an embodiment of the present invention is described in detail.

The polyurethane foam (hereinafter simply foam) according to the present embodiment is obtained as follows. Specifically, the foam is obtained by reaction, foaming and curing of a foam raw material containing polyols, polyisocyanates, a blowing agent and a catalyst. In that process, a hydrate of an inorganic compound and at least one organic compound selected from benzothiazole compounds, dithiocarbamate compounds and sulfenamide compounds are mixed with the foam raw material. The hydrate of an inorganic compound decomposes and generates water in the step where the foam raw material reacts and foams, and the generated water draws latent heat of vaporization, preventing temperature increase of the foam. The organic compound acts together with the hydrate of an inorganic compound to improve mechanical properties of the foam.

Foam raw material is now described. Polyether polyol or polyester polyol is used as polyols. Of these, polyether polyol is preferred because it is excellent in the reactivity with polyisocyanates and is not hydrolyzed as polyester polyol. Examples of polyether polyol include polypropylene glycol, polytetramethylene glycol, polyether polyol composed of a polymer obtained by addition polymerization of propylene oxide and ethylene oxide to polyhydric alcohol, and modified materials thereof. Examples of polyhydric alcohol include glycerol and dipropylene glycol.

Specific examples of polyether polyol composed of a polymer obtained by addition polymerization of propylene oxide and ethylene oxide to polyhydric alcohol include triol obtained by addition polymerization of propylene oxide to glycerol and further addition polymerization of ethylene oxide thereto, and diol obtained by addition polymerization of propylene oxide to dipropylene glycol and further addition polymerization of ethylene oxide thereto. The content of polyethylene oxide unit in polyether polyol is 10 to 30% by mole. When the content of the polyethylene oxide unit is high, polyether polyol is more hydrophilic compared to when the content is low. Therefore, mixing properties of polyether polyol, molecules having high polarity and polyisocyanates improve, and as a result, the reactivity of polyether polyol becomes high. The number of hydroxyl functional groups or the hydroxyl value of polyols can be changed, for example, by controlling the kind, the molecular weight or the condensation degree of raw material components.

Examples of polyester polyol include condensation polyester polyol obtained by causing polycarboxylic acid to react with polyol, lactone polyester polyol and polycarbonate polyol. Examples of polycarboxylic acid include adipic acid and phthalic acid. Examples of polyol which reacts with polycarboxylic acid include ethylene glycol, diethylene glycol, propylene glycol and glycerol.

Polyisocyanates which reacts with the aforementioned polyol contains a plurality of isocyanate groups. Specific examples of such isocyanates include tolylene diisocyanate (TDI), 4,4-diphenylmethane diisocyanate (MDI), 1,5-naphthalene diisocyanate (NDI), triphenylmethane triisocyanate, xylylene diisocyanate (XDI), hexamethylene diisocyanate (HDI), dicyclohexylmethane diisocyanate, isophorone diisocyanate (IPDI) and modified products thereof. Polyisocyanates may have an isocyanate index of 100 or less, or more than 100, which is generally in the range of 90 to 130, preferably in the range of 100 to 110. The isocyanate index is an equivalent ratio of isocyanate groups of polyisocyanates to active hydrogen groups on percentage. Thus, an isocyanate index of more than 100 means that the content of polyisocyanates in the foam raw material is in excess of, for example, the content of polyols. Examples of materials containing active hydrogen groups include polyols and water which is a blowing agent.

A blowing agent makes a polyurethane resin foam to provide the foam. Specific examples of blowing agents include water, and in addition, pentane, cyclopentane, hexane, cyclohexane, dichloromethane and carbon dioxide gas. Water is preferred as a blowing agent because it has high reactivity in the blowing reaction and is easy to handle. When using water as a blowing agent, water is added in a proportion of preferably 3.5 to 9.0 parts by mass based on 100 parts by mass of polyols so as to control the apparent density of the foam to 15 to 25 kg/m$^3$. When the proportion of water is less than 3.0 parts by mass, the volume of foaming is low, and the foam tends to have an apparent density of higher than 25 kg/m$^3$. When the proportion of water is more than 9.0 parts by mass, the temperature of the foam easily increases upon foaming and curing, and lowering the temperature is difficult.

A catalyst facilitates urethane formation reaction of polyols and polyisocyanates. Specific examples of catalysts include tertiary amines, organic metal compounds, acetates and alkali metal alcoholates. Examples of tertiary amines include triethylenediamine, dimethylethanolamine and N,N',N'-trimethylaminoethylpiperazine. Examples of organic metal compounds include tin octylate (stannous octoate).

For such catalysts, preferably an amine catalyst having a resinification activity constant according to a titration method of $0.22 \times 10$ to $2.0 \times 10$ and a ratio of a foaming activity constant/a resinification activity constant of $0.4 \times 10^{-1}$ to $3.0 \times 10^{-1}$ and a metal catalyst are used in combination. In particular, when the content of the hydrate of an inorganic compound is 20 to 30 parts by mass based on 100 parts by mass of polyols, the foam has poor strain properties compared to other cases, and therefore the above catalyst system is desirably used. The resinification activity constant and the ratio of a foaming activity constant/a resinification activity constant of the amine catalyst are brought to the above range so as to suppress the gelling reaction and the blowing reaction, and to adjust the balance between the reactions. Preferably, the amine catalyst has a resinification activity constant of $0.22 \times 10$ to $1.0 \times 10$ to effectively suppress the gelling reaction. The amine catalyst has a foaming activity constant of preferably $0.8 \times 10$ to $6.0 \times 10$, more preferably $0.8 \times 10$ to $0.5 \times 10$.

As used herein, the resinification activity constant and the foaming activity constant are calculated by a titration method, i.e., the A. Farkas method [Journal of American Chemical Society, 82, 642 (1960)]. The method is described below.

The reaction rate in the gelling reaction, the blowing reaction and the like in the production of foams is generally represented by the following formula:

$$dx/dt = K(a-x)^2$$

wherein, in the case of, for example, a gelling reaction, x represents the concentration (mol/L) of isocyanate groups, a represents the initial concentration (mol/L) of isocyanate groups and hydroxyl groups, K represents the reaction rate constant and t represents the reaction time (h).

The reaction rate constant K is calculated by measuring the relation between (a-x) and t by an experiment based on the reaction rate formula. On the other hand, assuming the following formula for the reaction rate constant, the catalytic constant Kc of catalysts can be determined.

$$K = Ko + KcC$$

wherein, Ko represents the reaction rate constant (L/mol·h) in the absence of a catalyst, Kc represents the catalytic constant ($L^2$/ (mol)$^2$·h) of catalysts, and C represents the catalyst concentration (mol/L) in the reaction system.

Generally, a catalytic constant $K_1$ which indicates a resinification activity constant in the gelling reaction in the production of foams is typically determined in a reaction system of TDI (tolylene diisocyanate) and DEG (diethylene glycol), and a catalytic constant $K_2$ which indicates a foaming activity constant in the blowing reaction is typically determined in a reaction system of TDI (tolylene diisocyanate) and $H_2O$.

When the resinification activity constant $K_1$ is less than $0.22 \times 10$, the progress of resinification is insufficient and good foams cannot be obtained. When the resinification activity constant $K_1$ is higher than $2.0 \times 10$, resinification advances too much and strain properties of the obtained foam become poor. When the ratio of a foaming activity constant $(K_2)$/a resinification activity constant $(K_1)$ is less than $0.4 \times 10^{-1}$, blowing reaction is smaller than gelling reaction, and good foams cannot be obtained because foaming is insufficient. When the ratio of a foaming activity constant $(K_2)$/a resinification activity constant $(K_1)$ is more than $3.0 \times 10^{-1}$, blowing reaction advances too much compared to gelling reaction, and strain properties of the obtained foam become poor.

Specific examples of the amine catalyst include N-methyl-N'-hydroxyethylpiperazine ($K_1=0.61 \times 10$, $K_2=0.11 \times 10$, $K_2/K_1=1.86 \times 10^{-1}$), N-ethylmorpholine ($K_1=0.22 \times 10$, $K_2=0.01 \times 10$, $K_2/K_1=0.47 \times 10^{-1}$), N-(N',N'-2-dimethylaminoethyl)morpholine ($K_1=0.93 \times 10$, $K_2=0.08 \times 10$, $K_2/K_1=0.81 \times 10^{-1}$) and aliphatic monoamine ($K_1=0.75 \times 10$, $K_2=0.22 \times 10$, $K_2/K_1=3.00 \times 10^{-1}$). Specific examples of metal catalysts include dibutyltin dilaurate and tin octylate (stannous octoate).

The content of the amine catalyst is preferably 0.01 to 0.5 part by mass, more preferably 0.1 to 0.5 part by mass based on 100 parts by mass of polyols. When the content of the amine catalyst is less than 0.01 part by mass, the gelling reaction and the blowing reaction possibly cannot be sufficiently promoted in a balanced manner. When the content of the amine catalyst is more than 0.5 part by mass, the gelling reaction and the blowing reaction advance too much, or the balance of the reactions is possibly consequently disrupted. The content of the metal catalyst is preferably 0.1 to 0.4 part by mass based on 100 parts by mass of the polyols. When the content of the metal catalyst is less than 0.1 part by mass, the gelling reaction and the blowing reaction are not balanced and foaming cannot be performed well. When the content of the metal catalyst is more than 0.4 part by mass, the gelling reaction and the blowing reaction advance too much and the balance of the reactions is disrupted and strain properties of the obtained foam become poor.

Hydrate of an inorganic compound decomposes by heating and produces water. Specific examples of hydrate of an inorganic compound include calcium sulfate dihydrate ($CaSO_4 \cdot 2H_2O$, dihydrate gypsum, specific gravity 2.32, decomposition temperature 128 to 163°C), monohydrate to heptahydrate of magnesium sulfate ($MgSO_4 \cdot H_2O$ to $MgSO_4 \cdot 7H_2O$, specific gravity 2.57 to 1.68, decomposition temperature 150°C), monohydrate to pentahydrate of iron sulfate ($FeSO_4 \cdot H_2O$ to $FeSO_4 \cdot 5H_2O$, specific gravity 2.97, decomposition temperature 100 to 130°C), mixtures thereof, monohydrate to trihydrate of aluminum oxide ($Al_2O_3 \cdot H_2O$ to $Al_2O_3 \cdot 3H_2O$, specific gravity 2.4 to 3.4, decomposition temperature 150 to 360°C) and copper sulfate pentahydrate ($CuSO_4 \cdot 5H_2O$, specific gravity 2.29). Hydrated water contained in hydrate of an inorganic compound is present in the form of solid crystal and stable at room temperature (25°C), which is crystal water. As such hydrate of an inorganic compound, sulfate hydrate is preferred. This is because, since sulfate hydrate gradually decomposes and produces water, for example, at 100°C or higher in the course of foaming of the foam raw material, the sulfate hydrate can exhibit endothermic action well. Examples of sulfate hydrates include calcium sulfate hydrates, magnesium sulfate hydrates and iron sulfate hydrates.

The hydrate of an inorganic compound has a specific gravity of preferably 1.5 to 4.0. When the specific gravity is less than 1.5, the volume of the hydrate of an inorganic compound to be added increases upon adding the hydrate of an inorganic compound in the form of powder in a pre-determined mass to the foam raw material, e.g., polyol. Therefore, the hydrate of an inorganic compound and polyol cannot be sufficiently mixed or stirred. Moreover, since the volume of the hydrate of an inorganic compound in the foam increases, properties of the foam possibly deteriorate. When the hydrate of an inorganic compound has a specific gravity more than 4.0, the hydrate of an inorganic compound easily precipitates in the foam raw material, especially polyol, when stored for a long time, and the dispersibility in the reaction mixture becomes poor. As a result, the function of hydrate of an inorganic compound of lowering the exothermic temperature cannot be sufficiently exhibited. Preferably, the hydrate of an inorganic compound has a decomposition temperature of 100 to 170°C. When the decomposition temperature is lower than 100°C, water is generated due to decomposition of the hydrate of an inorganic compound at an initial stage of foaming and curing of the foam raw material, i.e., at a stage where the exothermic temperature is low. Accordingly, generated water badly affects foaming and curing, or possibly acts as a blowing agent. In the case of calcium sulfate dihydrate (dihydrate gypsum), 1.5 moles of water of 2 moles of water in a molecule decomposes at 128°C to be free water, and the calcium sulfate dihydrate turns to calcium sulfate hemihydrate (gypsum hemihydrate). In the case of magnesium sulfate heptahydrate, 6 moles of water of 7 moles of water in a molecule decomposes at 150°C to be free water, and the magnesium sulfate heptahydrate turns to magnesium sulfate monohydrate.

Preferably, the mixing amount of hydrate of an inorganic compound is 3.0 to 30.0 parts by mass based on 100 parts by mass of polyols. When the mixing amount is less than 3.0 parts by mass, the amount of water generated by decomposition is small, and increase in the exothermic temperature due to reaction and foaming cannot be sufficiently prevented. On the other hand, when the mixing amount of the hydrate of an inorganic compound is more than 30.0 parts by mass, excess water generated by decomposition acts as a blowing agent, and there is a possibility that the blowing reaction advances too much and the exothermic temperature is increased.

An organic compound works synergistically with hydrate of an inorganic compound, and improves mechanical properties of the foam. As such an organic compound, at least one organic compound selected from benzothiazole compounds, dithiocarbamate compounds and sulfenamide compounds is used. Specific examples of benzothiazole compounds include 2-mercaptobenzothiazole (abbreviation: MBT according to the standard of The Society of Rubber Industry, Japan) and di-2-benzothiazolyl disulfide (MBTS according to the same standard). Specific examples of dithiocarbamate compounds include zinc diethyldithiocarbamate (ZnEDC according to the same standard), zinc dimethyldithiocarbamate (ZnMDC according to the same standard), zinc dibutyldithiocarbamate (ZnBDC according to the same standard), copper dimethyldithiocarbamate (CuMDC according to the same standard), ferric dimethyldithiocarbamate (FeMDC according to the same standard) and zinc dibenzyldithiocarbamate. Specific examples of sulfenamide compounds include N-cyclohexyl-2-benzothiazolylsulfenamide (CBS according to the same standard) and N-oxydiethylene-2- benzothiazolylsulfenamide (OBS according to the same standard). These organic compounds are used as a vulcanization (crosslinking) accelerator for rubber.

Preferably, the mixing amount of an organic compound is 0.1 to 3.0 parts by mass based on 100 parts by mass of polyols. When the mixing amount is less than 0.1 part by mass, the action of the organic compound is not sufficiently exerted, and mechanical properties of the obtained foam tends to be insufficient. When the organic compound is added in a proportion of more than 3.0 parts by mass, no further action of the organic compound is exerted, and there is a possibility that the properties of the foam is rather deteriorated.

In addition to the above components, a foam stabilizer, a crosslinking agent, a filler, a stabilizer, a colorant, a flame retardant or a plasticizer, for example, is added to the foam raw material according to need. As a foam stabilizer, a silicone compound, an anionic surfactant, polyether siloxane and a phenol compound may be used. Examples of anionic surfactants include sodium dodecylbenzenesulfonate and sodium laurylsulfate.

The foam is produced by reaction, foaming and curing of the foam raw material. The reaction in that case is complicated and basically involves the following reactions. Specifically, the reaction is mainly composed of addition polymerization reaction between polyols and polyisocyanates (urethane formation reaction), foaming (expansion) reaction between polyisocyanates and water which is a blowing agent, and crosslinking (curing) reaction between the reaction products and polyisocyanates.

In the production of foams, a one-shot process or a prepolymer process may be used. In the one-shot process, polyols and polyisocyanates are caused to react directly. In the prepolymer process, polyols and polyisocyanates are previously caused to react to give a prepolymer having an isocyanate group at a terminal, and the prepolymer and polyols are caused to react. The foam may be a slab foam which is obtained by foaming and curing of the foam raw material at room temperature under atmospheric pressure, or a molded foam obtained by injecting the foam raw material (reaction mixture) into a mold, clamping, and foaming and curing of the foam raw material in the mold. Of the two, slab foams are preferred because continuous production is possible.

The foam thus obtained has a low density with an apparent density defined by the International Standard ISO 845 (Japanese Industrial Standard JIS K 7222:1999) of 15 to 25 kg/m$^3$. Further, the foam has superior mechanical properties such as a tensile strength defined by ISO 1798 (JIS K 6400-5:2004) of 60 to 130 kPa, an elongation of 110 to 150%, and a tear strength defined by ISO 8067 (JIS K 6400-5:2004) of 5.5 to 8.0 N/cm. The foam has good cushioning properties, and is light and soft. Soft foams generally have an open cell (foam) structure, and refer to foams with recovering properties. Accordingly, soft foams can exhibit properties such as cushioning properties, shock absorbing properties and sound absorbing properties. Foams with such properties are suitably used for bedding such as beds, mattresses and pillows and as sound absorbing materials, cushioning materials and the like.

Referring now to the action of the present embodiment, a hydrate of an inorganic compound and at least one organic compound selected from benzothiazole compounds, dithiocarbamate compounds and sulfenamide compounds are mixed with the foam raw material. The foam raw material then reacts upon mixing, foams and reaches a temperature of, for example, 100°C or higher. At this stage, the hydrate of an inorganic compound is decomposed to free water, and this water is evaporated and draws the latent heat of vaporization, preventing increase in the temperature of the foam. Simultaneously, presumably the organic compound and the hydrate of an inorganic compound act synergistically and prevent blowing reaction from advancing too much, accelerating cross-linking reaction. Accordingly, the crosslink density of the foam is increased, and embrittlement, especially embrittlement in the deep part (inner layer) of the foam (block), is prevented. As a result, the obtained foam has a higher hardness and strength.

Herein, a urea compound is formed upon reaction between an isocyanate group of polyisocyanates and water generated by decomposition of hydrate of an inorganic compound mixed especially excessively. The color of the foam then changes due to a color radical such as a urea bond which the urea compound has. On the other hand, the organic compound presumably has catalytic action to prevent reaction between polyisocyanate and water generated by decomposition of hydrate of an inorganic compound. As a result, generation of color radicals such as a urea bond can be prevented. It is also presumed that since the hydrate of an inorganic compound easily adsorbs nitrogen oxide gas (NOx gas) generated in the course of resinification, the NOx gas stays in the foam and therefore discoloration of the foam is accelerated. It is considered, however, that the organic compound balances the gelling reaction and the blowing reaction and prevents generation of NOx gas, and as a result, discoloration of the foam by NOx gas is suppressed.

The preferred embodiment as described above has the following advantages.

In the foam according to the present embodiment, a hydrate of an inorganic compound and at least one organic compound selected from benzothiazole compounds, dithiocarbamate compounds and sulfenamide compounds are mixed with the foam raw material in combination. Accordingly, water generated by decomposition of the hydrate of an inorganic compound draws the latent heat of vaporization, and therefore increase in the temperature of the foam is prevented. Further, the organic compound and the hydrate of an inorganic compound presumably act together, preventing blowing reaction from advancing too much and accelerating cross-linking reaction. As a result, mechanical properties of the foam such as tensile strength, tear strength and elongation can be improved.

Moreover, as the organic compound inhibits formation of color radicals such as a urea bond and also prevents generation of NOx gas, discoloration of the foam can be suppressed. In addition, even in mass production, uniform and good foams can be produced and the productivity of the foam can be improved.

The above advantages can be fully demonstrated by setting the mixing amount of the organic compound at 0.1 to 3.0 parts by mass based on 100 parts by mass of polyols.

By using sulfate hydrate as the hydrate of an inorganic compound, the sulfate hydrate decomposes in the course of foaming of the foam raw material to generate water, providing excellent endothermic action.

By setting the mixing amount of the hydrate of an inorganic compound at 3.0 to 30.0 parts by mass based on 100 parts by mass of polyols, endothermic action by the hydrate of an inorganic compound can be fully demonstrated.

By using water as the blowing agent and setting the mixing amount at 3.5 to 9.0 parts by mass based on 100 parts by mass of polyols, the blowing reaction can be sufficiently advanced.

By using an amine catalyst having a resinification activity constant according to a titration method of $0.22 \times 10$ to $2.0 \times 10$ and a ratio of a foaming activity constant/a resinification activity constant of $0.4 \times 10^{-1}$ to $3.0 \times 10^{-1}$ as the catalyst, the gelling reaction and the blowing reaction can be suppressed and those reactions can be balanced. Further, by using a metal catalyst as the catalyst and setting the content at 0.1 to 0.4 part by mass based on 100 parts by mass of polyols, excessive progress of gelling reaction can be prevented and the gelling reaction and the blowing reaction can be balanced. Accordingly, strain properties of the foam, which are typically compressive residual strain, can be improved.

The obtained foam has an apparent density defined by ISO 845 of 15 to 25 kg/m$^3$, a tensile strength defined by ISO 1798 of 60 to 130 kPa and an elongation of 110 to 150%, and a tear strength defined by ISO 8067 of 6.0 to 8.0 N/cm. Accordingly, the foam has a low density and can exhibit excellent mechanical properties.

By mixing the hydrate of an inorganic compound with the foam raw material, the temperature of the foam upon reaction and foaming can be kept at 170°C or lower while the temperature reaches 170°C or higher when no hydrate of an inorganic compound is mixed with the foam raw material. Accordingly, scorch (discoloration) of the foam, which is generated when exposed to a high temperature of 170°C or higher, can be prevented.

In the following, the preferred embodiment is described in more detail with reference to Examples and Comparative Examples, but the present invention is not limited to the Examples.

(Examples 1 to 9 and Comparative Examples 1 to 4)

First, foam raw materials used in Examples and Comparative Examples are shown below.

Polyol GP-3050F: polyether polyol in which propylene oxide is addition-polymerized to glycerol, available from Sanyo Chemical Industries, Ltd., having a molecular weight of 3050, 3 hydroxyl functional groups and a hydroxyl value of 56 (mgKOH/g).

Amine catalyst KL No.3: amine catalyst N,N,N',N",N"-pentamethyldiethylenetriamine available from KAO CORPORATION.

Foam stabilizer F-650: silicone foam stabilizer available from Shin-Etsu Chemical Co., Ltd.

Metal catalyst MRH-110: metal catalyst dibutyltin dilaurate available from Johoku Chemical Co., Ltd.

Polyisocyanate T-80: tolylene diisocyanate (a mixture of 80% by mass of 2,4-tolylene diisocyanate and 20% by mass of 2,6-tolylene diisocyanate) available from Nippon Polyurethane Co., Ltd.

Dihydrate gypsum: dihydrate gypsum having a specific gravity of 2.32 and an average particle size of 40 μm available from Noritake Co., Ltd.

Magnesium sulfate heptahydrate: magnesium sulfate heptahydrate having a specific gravity of 1.68 and an average particle size of 50 μm.

Organic compound powder 1: 2-mercaptobenzothiazole (MBT: NOCCELER M-P available from OHUCHI SHINKO CHEMICAL INDUSTRIAL CO., LTD.).

Organic compound powder 2: zinc diethyldithiocarbamate (ZnEDC: NOCCELER EZ available from OHUCHI SHINKO CHEMICAL INDUSTRIAL CO., LTD.).

Organic compound powder 3: N-cyclohexyl-2-benzothiazolylsulfenamide (CBS: NOCCELER CZ available from OHUCHI SHINKO CHEMICAL INDUSTRIAL CO., LTD.).

Antioxidant I-1135: phenol antioxidant available from Ciba Specialty Chemicals.

Antioxidant PEP-11C: phosphoric acid antioxidant available from ADEKA CORPORATION.

Antioxidant AO-23: sulfur antioxidant available from ADEKA CORPORATION.

Foam raw materials in Examples and Comparative Examples were prepared according to compounding ratios shown in Table 1 and Table 2. In Comparative Example 1, dihydrate gypsum was mixed as a hydrate of an inorganic compound and the organic compound powder was not mixed. In Comparative Example 2 to Comparative Example 4, dihydrate gypsum and a different kind of antioxidant was mixed. In the Tables, the unit of the numerical value indicating the compounding ratio of each raw material is part(s) by mass.

These foam raw materials were poured into a foaming vessel of 500 mm in length, width and height. After foaming at room temperature under atmospheric pressure, the materials were cured (cross-linked) by passing through a furnace to give a soft slab foam. The obtained soft slab foam was cut to produce a sheet-shaped foam. The apparent density, tensile strength, elongation, tear strength and color difference (ΔYI) of the foam were measured by the following measurement methods. The results are shown in Table 1 and Table 2.

(Measurement Method)

Apparent density ($kg/m^3$): measured in accordance with ISO 845.

Tensile strength (kPa), elongation (%) and tear strength (N/cm): measured in accordance with ISO 1798 and ISO 8067.

Color difference (ΔYI): degree of yellowness (degree of whiteness) at a high temperature part (central part) and a low temperature part (side part) of a foam upon reaction and foaming was measured by a color difference meter [made by Suga Test Instruments Co., Ltd., SM Color Computer SM-4], and the result is shown in their color difference (ΔYI).

Table 1

|  | Ex. 1 | Ex. 2 | Ex. 3 | Com. Ex.1 | Com. Ex.2 | Com. Ex.3 | Com. Ex.4 |
|---|---|---|---|---|---|---|---|
| Polyol GP-3050 | 100 | 100 | 100 | 100 | 100 | 100 | 100 |
| Water | 7 | 7 | 7 | 7 | 7 | 7 | 7 |
| Amine catalyst KL No.3 | 0.1 | 0.1 | 0.1 | 0.1 | 0.1 | 0.1 | 0.1 |
| Metal catalyst MRH-110 | 0.3 | 0.3 | 0.3 | 0.3 | 0.3 | 0.3 | 0.3 |
| Foam stabilizer F-650 | 1.5 | 1.5 | 1.5 | 1.5 | 1.5 | 1.5 | 1.5 |
| Polyisocyanate T-80 | 78 | 78 | 78 | 78 | 78 | 78 | 78 |
| Isocyanate index | 102 | 102 | 102 | 102 | 102 | 102 | 102 |

(continued)

|  | Ex. 1 | Ex. 2 | Ex. 3 | Com. Ex.1 | Com. Ex.2 | Com. Ex.3 | Com. Ex.4 |
|---|---|---|---|---|---|---|---|
| Dihydrate gypsum | 10.0 | 10.0 | 10.0 | 10.0 | 10.0 | 10.0 | 10.0 |
| Organic compound powder 1 | 1.0 | - | - | - | - | - | - |
| Organic compound powder 2 | - | 1.0 | - | - | - | - | - |
| Organic compound powder 3 | - | - | 1.0 | - | - | - | - |
| Antioxidant I-1135 | - | - | - | - | 1.0 | - | - |
| Antioxidant PEP-11C | - | - | - | - | - | 1.0 | - |
| Antioxidant AO-23 | - | - | - | - | - | - | 1.0 |
| Apparent density (kg/m$^3$) | 18.3 | 18.2 | 18.2 | 18.2 | 18.1 | 18.2 | 18.1 |
| Tensile strength (kPa) | 101 | 102 | 105 | 25 | 25 | 25 | 31 |
| Elongation (%) | 140 | 140 | 140 | 40 | 40 | 30 | 30 |
| Tear strength (N/cm) | 6.91 | 6.35 | 6.55 | 1.95 | 2.01 | 1.05 | 2.56 |
| Color difference (ΔYI) | 48 | 18 | 50 | 60 | - | - | - |

Table 2

|  | Ex. 4 | Ex. 5 | Ex. 6 | Ex. 7 | Ex. 8 | Ex. 9 |
|---|---|---|---|---|---|---|
| Polyol GP-3050 | 100 | 100 | 100 | 100 | 100 | 100 |
| Water | 3.5 | 9.0 | 3.5 | 9.0 | 3.5 | 9.0 |
| Amine catalyst KL No.3 | 0.1 | 0.1 | 0.1 | 0.1 | 0.1 | 0.1 |
| Metal catalyst MRH-110 | 0.3 | 0.3 | 0.3 | 0.3 | 0.3 | 0.3 |
| Foam stabilizer F-650 | 1.5 | 1.5 | 1.5 | 1.5 | 1.5 | 1.5 |
| Polyisocyanate T-80 | 43.4 | 97.7 | 43.4 | 97.7 | 43.4 | 97.7 |
| Isocyanate index | 102 | 102 | 102 | 102 | 102 | 102 |
| Dihydrate gypsum | 3.0 | 15.0 | 15.0 | 30.0 | - | - |
| Magnesium sulfate heptahydrate | - | - | - | - | 3.0 | 15.0 |
| Organic compound powder 1 | 0.5 | 3.0 | 3.0 | 3.0 | 0.5 | 3.0 |
| Apparent density (kg/m$^3$) | 25.0 | 16.2 | 25.0 | 20.2 | 25.0 | 16.0 |
| Tensile strength (kPa) | 123 | 78 | 122 | 110 | 110 | 70 |
| Elongation (%) | 150 | 130 | 140 | 140 | 120 | 110 |
| Tear strength (N/cm) | 7.65 | 4.41 | 6.55 | 6.50 | 6.60 | 3.81 |
| Color difference (ΔYI) | 45 | 45 | 36 | 34 | 44 | 41 |

As shown in Table 1, since dihydrate gypsum which is a hydrate of an inorganic compound and the organic compound powder are mixed in Example 1 to 3, water generated by decomposition of dihydrate gypsum draws latent heat of vaporization and therefore increase in the temperature of the foam was suppressed. Further, it is presumed that the organic compound powder and dihydrate gypsum act synergistically and prevent blowing reaction from advancing too much, accelerating cross-linking reaction. As a result, the tensile strength, the elongation and the tear strength of the obtained foam was improved. On the other hand, since only dihydrate gypsum is mixed in Comparative Example 1, suppression of the blowing reaction and progress of the cross-linking reaction seem to be insufficient, and thus all the tensile strength, the elongation and the tear strength were decreased as compared to Examples. In Comparative Examples 2 to 4, dihydrate gypsum and an antioxidant were mixed, but the cross-linking reaction was not promoted, and improvement in the tensile strength, elongation and the tear strength was not found. Further, in Examples 1 to 3, color difference (ΔYI) was smaller than that in Comparative Example 1 to which organic compound powder was not mixed, and discoloration of the foam was suppressed.

Further, as shown in Table 2, although the mixing amount of water which is a blowing agent was reduced and the mixing amount of dihydrate gypsum and organic compound powder 1 was reduced in Example 4, the tensile strength, the elongation and the tear strength could be improved. In Example 5, the mixing amount of water was increased and the mixing amount of dihydrate gypsum and organic compound powder 1 was increased in contrast to Example 4, and the tensile strength, the elongation and the tear strength were slightly decreased as compared to those in Examples 1 to 4, but the foam showed sufficient mechanical properties. Although the mixing amount of water was reduced in Example 6 under the conditions of Example 5, the tensile strength, the elongation and the tear strength were equivalent to those in Examples 1 to 3. Although the mixing amount of dihydrate gypsum was increased 2-fold in Example 7 under the conditions of Example 5, the tensile strength, the elongation and the tear strength were improved compared to those in Example 5. In Example 8, hydrate of an inorganic compound was changed to magnesium sulfate heptahydrate under the conditions of Example 4. Although the tensile strength, the elongation and the tear strength were slightly decreased compared to those in Example 4, the foam showed sufficient mechanical properties. In Example 9, hydrate of an inorganic compound was changed to magnesium sulfate heptahydrate under the conditions of Example 5. Although the tensile strength, the elongation and the tear strength were slightly decreased compared to those in Example 5, the foam showed sufficient mechanical properties. Further, in Examples 4 to 9, color difference (ΔYI) was smaller than that in Comparative Example 1, and discoloration of the foam could be suppressed.

(Examples 10 to 21)

The difference with Examples 1 to 9 is shown below. Foams were prepared in the same manner as in Examples 1 to 9 except for the difference. Foam raw materials different from those in Examples 1 to 9 are shown below.

Polyol #3000 (hetero): polyether polyol in which propylene oxide and ethylene oxide (8%) are addition-polymerized to glycerol (Polyol GP-3050 available from Sanyo Chemical Industries, Ltd.), having a molecular weight of 3000, 3 hydroxyl functional groups and a hydroxyl value of 56 (mgKOH/g).
Polyol #3000 (homo): polyether polyol in which propylene oxide is addition-polymerized to glycerol (GP-3000NS available from Sanyo Chemical Industries, Ltd.), having a molecular weight of 3000, 3 hydroxyl functional groups and a hydroxyl value of 56 (mgKOH/g).
Catalyst 33LV: triethylenediamine available from CHUKYO YUSHI CO., LTD.
Catalyst TOYOCAT NEM: N-ethylmorpholine.
Catalyst TOYOCAT DAEM: N-(N',N'-2-dimethylaminoethyl) morpholine.
Catalyst TOYOCAT D60: aliphatic monoamine.
Organic compound powder 4: zinc dibenzyldithiocarbamate (NOCCELER ZTC available from OHUCHI SHINKO CHEMICAL INDUSTRIAL CO., LTD.).
Foam stabilizer BF-2370: silicone foam stabilizer available from Goldschmidt AG.

In addition to the apparent density, the tensile strength, the elongation, the tear strength and the color difference of the obtained foams, the hardness, the impact resilience, the compressive residual strain and the airflow quantity were measured. The results are shown in Table 3 and Table 4. The measurement method of the hardness, the impact resilience, the compressive residual strain and the airflow quantity is shown below.

Hardness (N): measured in accordance with ISO 2439 (JIS K 6400-2:2004).
Impact resilience (%): measured in accordance with ISO 8307 (JIS K 6400-3:2004).
Compressive residual strain (%): measured in accordance with ISO 1856 (JIS K 6400-4:2004).
Airflow quantity (L/min): measured in accordance with the standard of the American Society for Testing and Materials ASTM D3574.

Table 3

| | Ex. | | | | Ex. | | | |
|---|---|---|---|---|---|---|---|---|
| | 10 | 11 | 12 | 13 | 14 | 15 | 16 | 17 |
| Polyol #3000(hetero) | 70 | 70 | 70 | 70 | 80 | 80 | 80 | 80 |
| Polyol #3000(homo) | 30 | 30 | 30 | 30 | 20 | 20 | 20 | 20 |

(continued)

| | Ex. | | | | Ex. | | | |
|---|---|---|---|---|---|---|---|---|
| | 10 | 11 | 12 | 13 | 14 | 15 | 16 | 17 |
| Water | 6.0 | 6.0 | 6.0 | 6.0 | 5.0 | 5.0 | 5.0 | 5.0 |
| Amine catalyst 33LV | 0.1 | - | - | - | 0.1 | - | - | - |
| Catalyst TOYOCAT NEM | - | 0.1 | - | - | - | 0.1 | - | - |
| Catalyst TOYOCAT DAEM | - | - | 0.1 | - | - | - | 0.1 | - |
| Catalyst TOYOCAT D60 | - | - | - | 0.1 | - | - | - | 0.1 |
| Metal catalyst MRH-110 | 0.25 | 0.25 | 0.25 | 0.25 | 0.25 | 0.25 | 0.25 | 0.25 |
| Organic compound powder 4 | 1.0 | 1.0 | 1.0 | 1.0 | 0.5 | 0.5 | 0.5 | 0.5 |
| Foam stabilizer BF-2370 | 1.5 | 1.5 | 1.5 | 1.5 | 1.2 | 1.2 | 1.2 | 1.2 |
| Polyisocyanate T-80 | 68.0 | 68.0 | 68.0 | 68.0 | 60.0 | 60.0 | 60.0 | 60.0 |
| Isocyanate index | 100 | 100 | 100 | 100 | 104 | 104 | 104 | 104 |
| Dihydrate gypsum | 30.0 | 30.0 | 30.0 | 30.0 | 20.0 | 20.0 | 20.0 | 20.0 |
| Apparent density (kg/m$^3$) | 21.5 | 21.0 | 20.6 | 20.2 | 22.5 | 22.6 | 22.4 | 22.2 |
| Hardness (N) | 72 | 65 | 65 | 68 | 75 | 62 | 61 | 63 |
| Impact resilience (%) | 30 | 30 | 30 | 30 | 30 | 30 | 30 | 30 |
| Tensile strength (kPa) | 72 | 72 | 72 | 71 | 88 | 85 | 86 | 86 |
| Elongation (%) | 120 | 120 | 120 | 120 | 140 | 140 | 140 | 140 |
| Tear strength (N/cm) | 6.1 | 5.8 | 5.6 | 5.8 | 6.1 | 6.1 | 6.2 | 5.8 |
| Compressive residual strain (%) | 11.2 | 5.9 | 5.7 | 5.7 | 8.6 | 3.5 | 3.5 | 3.5 |
| Airflow quantity (L/min) | 35 | 50 | 50 | 50 | 33 | 50 | 50 | 50 |
| Color difference (ΔYI) | 22 | 21 | 21 | 20 | 33 | 32 | 30 | 33 |

As shown in Table 3, since an amine catalyst whose resinification activity constant and ratio of a foaming activity constant/a resinification activity constant are within the scope of the present invention and a metal catalyst were mixed as catalysts in the mixing amount specified in the present invention in Examples 11 to 13, especially the compressive residual strain could be kept at 5.9% or less as compared to 11.2% in Example 10 in which an amine catalyst other than the above catalyst was used. Further, the obtained foams had good mechanical properties such as tensile strength and elongation, and sufficient airflow quantity. In addition, the color difference (ΔYI) could be kept at 22 or lower.

Since an amine catalyst whose resinification activity constant and ratio of a foaming activity constant/a resinification activity constant are within the scope of the present invention and a metal catalyst were mixed as catalysts in Examples 15 to 17, especially the compressive residual strain could be kept at 3.5% as compared to 8.6% in Example 14 in which an amine catalyst other than the above was used. Further, the foams had good mechanical properties such as tensile strength and elongation, and sufficient airflow quantity. In addition, the color difference (ΔYI) could be kept at 33 or lower.

Table 4

| | Ex. | | | |
|---|---|---|---|---|
| | 18 | 19 | 20 | 21 |
| Polyol #3000 (hetero) | 70 | 70 | 70 | 70 |
| Polyol #3000 (homo) | 30 | 30 | 30 | 30 |
| Water | 7.0 | 7.0 | 7.0 | 7.0 |
| Amine catalyst 33LV | 0.1 | - | - | - |

(continued)

| | Ex. | | | |
|---|---|---|---|---|
| | 18 | 19 | 20 | 21 |
| Catalyst TOYOCAT NEM | - | 0.1 | - | - |
| Catalyst TOYOCAT DAEM | - | - | 0.1 | - |
| Catalyst TOYOCAT D60 | - | - | - | 0.1 |
| Metal catalyst MRH-110 | 0.25 | 0.25 | 0.25 | 0.25 |
| Organic compound powder 4 | 1.0 | 1.0 | 1.0 | 1.0 |
| Foam stabilizer BF-2370 | 1.5 | 1.5 | 1.5 | 1.5 |
| Polyisocyanate T-80 | 76.0 | 76.0 | 76.0 | 76.0 |
| Isocyanate index | 100 | 100 | 100 | 100 |
| Dihydrate gypsum | 30.0 | 30.0 | 30.0 | 30.0 |
| Apparent density ($kg/m^3$) | 21.5 | 21.0 | 20.6 | 20.2 |
| Hardness (N) | 69 | 65 | 65 | 65 |
| Impact resilience (%) | 30 | 30 | 30 | 30 |
| Tensile strength (kPa) | 70 | 71 | 71 | 70 |
| Elongation (%) | 130 | 130 | 130 | 130 |
| Tear strength (N/cm) | 6.9 | 6.5 | 6.4 | 6.5 |
| Compressive residual strain (%) | 11.5 | 5.9 | 5.5 | 5.9 |
| Airflow quantity (L/min) | 40 | 50 | 50 | 50 |
| Color difference ($\Delta YI$) | 27 | 26 | 27 | 28 |

As shown in Table 4, since an amine catalyst whose resinification activity constant and ratio of a foaming activity constant/a resinification activity constant are within the scope of the present invention and a metal catalyst were mixed as catalysts in Examples 19 to 21, especially the compressive residual strain could be kept at 5.9% or less as compared to 11.5% in Example 18 in which an amine catalyst other than the above catalyst was used. Further, the foams had good mechanical properties such as tensile strength and elongation, and sufficient airflow quantity. In addition, the color difference ($\Delta YI$) could be kept at 28 or lower.

The preferred embodiment may be modified as follows.

As the hydrate of an inorganic compound, a plurality of hydrates, for example, calcium sulfate hydrate and magnesium sulfate hydrate, may be mixed in combination. In that case, the hydrates of an inorganic compound can provide their function in a broader temperature range and can effectively lower the exothermic temperature upon reaction and foaming.

As the organic compound, benzothiazole compounds, dithiocarbamate compounds and sulfenamide compounds may be mixed in combination of two or more.

In addition to the organic compound, a vulcanization aid may be mixed. Examples of vulcanization aid include stearic acid and zinc stearate.

The form of the organic compound may be changed to a form other than powder, for example, a liquid.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A polyurethane foam for production by reaction, foaming and curing of a polyurethane foam raw material comprising polyols, polyisocyanates, a blowing agent and a catalyst, **characterized in that** a hydrate of an inorganic compound and at least one organic compound selected from benzothiazole compounds, dithiocarbamate compounds and sulfenamide compounds are mixed with the polyurethane foam raw material.

2. The polyurethane foam according to claim 1, **characterized in that** the organic compound is 2-mercaptobenzothiazole, zinc diethyldithiocarbamate, N-cyclohexyl-2-benzothiazolylsulfenamide or zinc dibenzyldithiocarbamate.

3. The polyurethane foam according to claim 1 or 2, the polyurethane foam being **characterized by**: containing 0.1 to 3.0 parts by mass of the organic compound based on 100 parts by mass of the polyols.

4. The polyurethane foam according to any one of claims 1 to 3, **characterized in that** the hydrate of an inorganic compound is a sulfate hydrate.

5. The polyurethane foam according to claim 4, **characterized in that** the sulfate hydrate is a calcium sulfate hydrate or a magnesium sulfate hydrate.

6. The polyurethane foam according to any one of claims 1 to 5, **characterized in that** the hydrate of an inorganic compound has a specific gravity of 1.5 to 4.0.

7. The polyurethane foam according to any one of claims 1 to 6, **characterized in that** the hydrate of an inorganic compound has a decomposition temperature of 100 to 170°C.

8. The polyurethane foam according to any one of claims 1 to 7, the polyurethane foam being **characterized by**: 3.0 to 30.0 parts by mass of the hydrate of an inorganic compound based on 100 parts by mass of the polyols.

9. The polyurethane foam according to any one of claims 1 to 8, the polyurethane foam being **characterized by**: 3.5 to 9.0 parts by mass of water based on 100 parts by mass of the polyols as the blowing agent.

10. The polyurethane foam according to any one of claims 1 to 9, **characterized in that** the polyols is a polyether polyol or a polyester polyol.

11. The polyurethane foam according to claim 10, **characterized in that** the polyols is a polyether polyol.

12. The polyurethane foam according to any one of claims 1 to 11, **characterized in that** the polyisocyanates has an isocyanate index of 100 to 110.

13. The polyurethane foam according to any one of claims 1 to 12, **characterized in that** the polyurethane foam raw material comprises, as the catalyst, an amine catalyst having a resinification activity constant according to a titration method of $0.22 \times 10$ to $2.0 \times 10$ and a ratio of a foaming activity constant/a resinification activity constant of $0.4 \times 10^{-1}$ to $3.0 \times 10^{-1}$, and a metal catalyst, and contains 0.1 to 0.4 part by mass of the metal catalyst based on 100 parts by mass of the polyols.

14. The polyurethane foam according to claims 13, **characterized in that** the resinification activity constant is $0.22 \times 10$ to $1.0 \times 10$.

15. The polyurethane foam according to claims 13 or 14, **characterized in that** the foaming activity constant is $0.8 \times 10$ to $6.0 \times 10$.

16. The polyurethane foam according to any one of claims 13 to 15, the polyurethane foam being **characterized by**: 0.01 to 0.5 part by mass of the amine catalyst based on 100 parts by mass of the polyols.

17. The polyurethane foam according to any one of claims 13 to 16, **characterized in that** the amine catalyst is N,N, N',N'',N''-pentamethyldiethylenetriamine, N-ethylmorpholine, N-(N',N'-2-dimethylaminoethyl)morpholine or an aliphatic monoamine, and the metal catalyst is dibutyltin dilaurate.

18. The polyurethane foam according to any one of claims 1 to 17, the polyurethane foam being **characterized by**: an apparent density defined by the International Standard ISO 845 of 15 to 25 kg/m$^3$, and a tensile strength defined by ISO 1798 of 60 to 130 kPa.

19. The polyurethane foam according to claims 18, the polyurethane foam being **characterized by**: an elongation defined by ISO 1798 of 110 to 150%, and a tear strength defined by ISO 8067 of 5.5 to 8.0 N/cm.

20. A method of producing a polyurethane foam, the method being **characterized by**:

    mixing a hydrate of an inorganic compound and at least one organic compound selected from benzothiazole compounds, dithiocarbamate compounds and sulfenamide compounds with a polyurethane foam raw material comprising polyols, polyisocyanates, a blowing agent and a catalyst, and
    causing the polyurethane foam raw material to react, foam and cure.


**Patentansprüche**

1. Polyurethanschaumstoff zur Herstellung durch Umsetzen, Aufschäumen und Härten eines Polyurethanschaumstoff-Ausgangsmaterials, das Polyole, Polyisocyanate, ein Treibmittel und einen Katalysator umfasst, **dadurch gekennzeichnet, dass** ein Hydrat einer anorganischen Verbidung und mindestens eine aus Benzothiazolverbindungen, Dithiocarbamatverbindungen und Sulfenamidverbindungen ausgewählte organische Verbindung mit dem Polyurethanschaumstoff-Ausgangsmaterial gemischt wird.

2. Polyurethanschaumstoff nach Anspruch 1, **dadurch gekennzeichnet, dass** es sich bei der organischen Verbindung um 2-Mercaptobenzothiazol, Zinkdiethyldiethiocarbamat, N-Cyclohexyl-2-benzothiazolyl-sulfenamid oder Zinkdibenzyldithiocarbamat handelt.

3. Polyurethanschaumstoff nach Anspruch 1 oder 2, wobei der Polyurethanschaumstoff **dadurch gekennzeichnet ist, dass** er 0,1 bis 3,0 Masseteile der organischen Verbindung, bezogen auf 100 Masseteile der Polyole, enthält.

4. Polyurethanschaumstoff nach einem der Ansprüche 1 bis 3, **dadurch gekennzeichnet, dass** es sich bei dem Hydrat einer anorganischen Verbindung um ein Sulfathydrat handelt.

5. Polyurethanschaumstoff nach Anspruch 4, **dadurch gekennzeichnet, dass** es sich bei dem Sulfathydrat um ein Calciumsulfathydrat oder ein Magnesiumsulfathydrat handelt.

6. Polyurethanschaumstoff nach einem der Ansprüche 1 bis 5, **dadurch gekennzeichnet, dass** das Hydrat einer anorganischen Verbindung ein spezifisches Gewicht von 1,5 bis 4,0 aufweist.

7. Polyurethanschaumstoff nach einem der Ansprüche 1 bis 6, **dadurch gekennzeichnet, dass** das Hydrat einer anorganischen Verbindung eine Zersetzungstemperatur von 100 bis 170°C aufweist.

8. Polyurethanschaumstoff nach einem der Ansprüche 1 bis 7, wobei der Polyurethanschaumstoff durch 3,0 bis 30,0 Masseteile des Hydrats einer anorganischen Verbindung, bezogen auf 100 Masseteile der Polyole, gekennzeichnet ist.

9. Polyurethanschaumstoff nach einem der Ansprüche 1 bis 8, wobei der Polyurethanschaumstoff durch 3,5 bis 9,0 Masseteile Wasser, bezogen auf 100 Masseteile der Polyole, als Treibmittel gekennzeichnet ist.

10. Polyurethanschaumstoff nach einem der Ansprüche 1 bis 9, **dadurch gekennzeichnet, dass** es sich bei den Polyolen um ein Polyetherpolyol oder ein Polyesterpolyol handelt.

11. Polyurethanschaumstoff nach Anspruch 10, **dadurch gekennzeichnet, dass** es sich bei den Polyolen um ein Polyetherpolyol handelt.

**12.** Polyurethanschaumstoff nach einem der Ansprüche 1 bis 11, **dadurch gekennzeichnet, dass** die Polyisocyanate einen Isocyanatindex von 100 bis 110 aufweisen.

**13.** Polyurethanschaumstoff nach einem der Ansprüche 1 bis 12, **dadurch gekennzeichnet, dass** das Polyurethanschaumstoff-Ausgangsmaterial als Katalysator einen Aminkatalysator mit einer Verharzungsaktivitätskonstante gemäß einer Titrationsmethode von $0,22 \times 10$ bis $2,0 \times 10$ und ein Verhältnis von Verschäumungsaktivitätskontante zu Verharzungsaktivitätskonstante von $0,4 \times 10^{-1}$ bis $3,0 \times 10^{-1}$ und einen Metallkatalysator umfasst und 0,1 bis 0,4 Masseteile des Metallkatalysators, bezogen auf 100 Masseteile der Polyole, enthält.

**14.** Polyurethanschaumstoff nach Anspruch 13, **dadurch gekennzeichnet, dass** die Verharzungsaktivitätskonstante $0,22 \times 10$ bis $1,0 \times 10$ beträgt.

**15.** Polyurethanschaumstoff nach Anspruch 13 oder 14, **dadurch gekennzeichnet, dass** die Verschäumungsaktivitätskontante $0,8 \times 10$ bis $6,0 \times 10$ beträgt.

**16.** Polyurethanschaumstoff nach einem der Ansprüche 13 bis 15, wobei der Polyurethanschaumstoff durch 0,01 bis 0,5 Masseteile des Aminkatalysators, bezogen auf 100 Masseteile der Polyole, gekennzeichnet ist.

**17.** Polyurethanschaumstoff nach einem der Ansprüche 13 bis 16, **dadurch gekennzeichnet, dass** es sich bei dem Aminkatalysator um N,N,N',N'',N''-Pentamethyl-diethylentriamin, N-Ethylmorpholin, N-(N',N'-2-Dimethylaminoethyl) morpholin oder ein aliphatisches Monoamin handelt und es sich bei dem Metallkatalysator um Dibutylzinndilaurat handelt.

**18.** Polyurethanschaumstoff nach einem der Ansprüche 1 bis 17, wobei der Polyurethanschaumstoff durch eine durch die Internationale Norm ISO 845 definierte Rohdichte von 15 bis 25 kg/m$^3$ und eine durch ISO 1798 definierte Zugfestigkeit von 60 bis 130 kPa gekennzeichnet ist.

**19.** Polyurethanschaumstoff nach Anspruch 18, wobei der Polyurethanschaumstoff durch eine durch ISO 1798 definierte Dehnung von 110 bis 150% und einen durch ISO 8067 definierten Weiterreißwiderstand von 5,5 bis 8,0 N/cm gekennzeichnet ist.

**20.** Verfahren zur Herstellung eines Polyurethanschaumstoffs, wobei das Verfahren **dadurch gekennzeichnet ist, dass** man:

ein Hydrat einer anorganischen Verbidung und mindestens eine aus Benzothiazolverbindungen, Dithiocarbamatverbindungen und Sulfenamidverbindungen ausgewählte organische Verbindung mit einem Polyurethanschaumstoff-Ausgangsmaterial, das Polyole, Polyisocyanate, ein Treibmittel und einen Katalysator umfasst, mischt und
das Polyurethanschaumstoff-Ausgangsmaterial zum Reagieren, Aufschäumen und Härten bringt.

## Revendications

**1.** Mousse de polyuréthane à produire par réaction, expansion et durcissement d'une matière première de mousse de polyuréthane comprenant des polyols, des polyisocyanates, un agent gonflant et un catalyseur, **caractérisée en ce qu'**un hydrate d'un composé inorganique et au moins un composé organique choisi parmi les composés benzothiazole, les composés dithiocarbamate et les composés sulfénamide sont mélangés avec la matière première de mousse de polyuréthane.

**2.** Mousse de polyuréthane selon la revendication 1, **caractérisée en ce que** le composé organique est le 2-mercaptobenzothiazole, le diéthyldithiocarbamate de zinc, le N-cyclohexyl-2-benzothiazolylsulfénamide ou le dibenzyldithiocarbamate de zinc.

**3.** Mousse de polyuréthane selon la revendication 1 ou 2, la mousse de polyuréthane étant **caractérisée par le fait qu'**elle contient 0,1 à 3,0 parties en poids du composé organique pour 100 parties en poids des polyols.

**4.** Mousse de polyuréthane selon l'une quelconque des revendications 1 à 3, **caractérisée en ce que** l'hydrate d'un composé inorganique est un hydrate de sulfate.

**5.** Mousse de polyuréthane selon la revendication 4, **caractérisée en ce que** l'hydrate de sulfate est un hydrate de sulfate de calcium ou un hydrate de sulfate de magnésium.

**6.** Mousse de polyuréthane selon l'une quelconque des revendications 1 à 5, **caractérisée en ce que** l'hydrate d'un composé inorganique possède une densité de 1,5 à 4,0.

**7.** Mousse de polyuréthane selon l'une quelconque des revendications 1 à 6, **caractérisée en ce que** l'hydrate d'un composé inorganique possède une température de décomposition de 100 à 170°C.

**8.** Mousse de polyuréthane selon l'une quelconque des revendications 1 à 7, la mousse de polyuréthane étant **caractérisée par** : 3,0 à 30,0 parties en poids de l'hydrate d'un composé inorganique pour 100 parties en poids des polyols.

**9.** Mousse de polyuréthane selon l'une quelconque des revendications 1 à 8, la mousse de polyuréthane étant **caractérisée par** : 3,5 à 9,0 parties en poids d'eau pour 100 parties en poids des polyols en tant qu'agent gonflant.

**10.** Mousse de polyuréthane selon l'une quelconque des revendications 1 à 9, **caractérisée en ce que** le polyol est un polyéther-polyol ou un polyester-polyol.

**11.** Mousse de polyuréthane selon la revendication 10, **caractérisée en ce que** le polyol est un polyéther-polyol.

**12.** Mousse de polyuréthane selon l'une quelconque des revendications 1 à 11, **caractérisée en ce que** le polyisocyanate possède un indice d'isocyanate de 100 à 110.

**13.** Mousse de polyuréthane selon l'une quelconque des revendications 1 à 12, **caractérisée en ce que** la matière première de mousse de polyuréthane comprend, en tant que catalyseur, un catalyseur à base d'amine ayant une constante d'activité de résinification selon une méthode de titrage de 0,22x10 à 2,0x10 et un rapport entre la constante d'activité d'expansion et la constante d'activité de résinification de 0,4x10$^{-1}$ à 3,0x10$^{-1}$, et un catalyseur à base de métal, et contient 0,1 à 0,4 partie en poids du catalyseur à base de métal pour 100 parties en poids des polyols.

**14.** Mousse de polyuréthane selon la revendication 13, **caractérisée en ce que** la constante d'activité de résinification est de 0,22x10 à 1,0x10.

**15.** Mousse de polyuréthane selon les revendications 13 ou 14, **caractérisée en ce que** la constante d'activité d'expansion est de 0,8x10 à 6,0x10.

**16.** Mousse de polyuréthane selon l'une quelconque des revendications 13 à 15, la mousse de polyuréthane étant **caractérisée par** : 0,01 à 0,5 partie en poids du catalyseur à base d'amine pour 100 parties en poids des polyols.

**17.** Mousse de polyuréthane selon l'une quelconque des revendications 13 à 16, **caractérisée en ce que** le catalyseur à base d'amine est la N,N,N',N'',N''-pentaméthyldiéthylènetriamine, la N-éthylmorpholine, la N-(N',N'-2-diméthylaminoéthyl)morpholine ou une monoamine aliphatique, et le catalyseur à base de métal est le dilaurate dibutylétain.

**18.** Mousse de polyuréthane selon l'une quelconque des revendications 1 à 17, la mousse de polyuréthane étant **caractérisée par** : une masse volumique apparente définie par la norme internationale ISO 845 de 15 à 25 kg/m$^3$, et une résistance à la traction définie par ISO 1798 de 60 à 130 kPa.

**19.** Mousse de polyuréthane selon la revendication 18, la mousse de polyuréthane étant **caractérisée par** : un allongement défini par ISO 1798 de 110 à 150%, et une résistance à la déchirure définie par ISO 8067 de 5,5 à 8,0 N/cm.

**20.** Procédé de production d'une mousse de polyuréthane, le procédé étant **caractérisé par** les étapes consistant à :

- mélanger un hydrate d'un composé inorganique et au moins un composé organique choisi parmi les composés benzothiazole, les composés dithiocarbamate et les composés sulfénamide avec une matière première de mousse de polyuréthane comprenant des polyols, des polyisocyanates, un agent gonflant et un catalyseur, et
- faire réagir, mousser et durcir la matière première de mousse de polyuréthane.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002532596 A
- JP 6199973 A

- US 4914137 A

**Non-patent literature cited in the description**

- *Journal of American Chemical Society,* 1960, vol. 82, 642